# EUROPEAN PATENT SPECIFICATION

(11) **EP 2 900 057 B1**
(45) Date of publication and mention of the grant of the patent: **12.07.2017**
(21) Application number: 13721129.8
(22) Date of filing: 25.03.2013
(51) Int. Cl.: A01K 5/02

(54) **AUTOMATIC FEEDING DEVICE FOR PETS**
AUTOMATISCHE FÜTTERUNGSVORRICHTUNG FÜR HAUSTIERE
DISPOSITIF D'ALIMENTATION AUTOMATIQUE POUR ANIMAUX DOMESTIQUES

(30) Priority: 28.03.2012 NO 20120396
(43) Date of publication of application: 05.08.2015
(73) Proprietor: Dyreidentitet AS, 0130 Oslo (NO)
(72) Inventor: VATN, Gudbrand, 0556 Oslo (NO)
(74) Representative: Zacco Norway AS
(86) International application number: PCT/NO2013/000010
(87) International publication number: WO 2013/147612

(56) References cited:
- GB-A- 2 199 477
- JP-A- H0 795 833
- US-A- 4 077 360
- US-A- 4 355 598

## Description

### Field of the invention

The present invention concerns an automatic feeding device for pets which is associated with an RFID reader for reading of one or more ID tags that are attached on one or more pets, and a method for use of the automatic feeding device.

### Background of the invention

Pets like dogs and cats are today tagged with ID tags based on the ISO standard 11784/85, which is based on Radio Frequency Identification (RFID) technology. RFID tags are available in active and passive versions. Active tags have their own battery and may therefore include more storage capacity, more functionality as well as working over longer distances (more than 100 meters) than passive tags. Passive tags have no battery, but induce their own energy from radio signals from a RFID reader and respond by sending a small amount of data. Signals from such tags normally have a range up to 30 cm. These tags are inserted under the skin of the pets, and are so-called passive tags.

In GB 2199477 A an automatic feeding device for animals is described. The automatic feeding device comprises a box including two rotating discs with openings for food containers. The device also includes engines that drive the rotating discs. Various automatic feeding devices for animals in which a RFID reader is used for reading of one or more ID tags are known. Patent document US 6044795 A regards an automatic feeding system for pets. A tag is attached to the pet with information about feeding of the pet. The automatic feeding system includes a reading device that receives and reads the information. An automatic feeding system to control the food intake of different types of animals is also disclosed in US 7895973 B1. The system is based on gravity and is suitable for pelleted food. An RFID reader and ID tags on the animals are used. Publication US 2005/0284382 A1 regards automatic feeding devices associated with an RFID reader for reading one or more ID tags that are attached to the pet. Also the publications WO 2009/063415 A2 and WO 2005/092019 A2 regard automatic feeding devices associated with a RFID reader.

The aforementioned automatic feeding devices are handling pelleted food and may cause some spillage during feeding. Pelleted food is also less appetizing to the pets than other food, and because the automatic feeding devices are used when animals are alone, it is important that the food is appetizing as no one is present to make sure that your pets are eating regularly. The shelf life of pelleted cat food is also generally less than for hermetic food.

The purpose of the present invention is to provide a device and a method that addresses at least one of the above mentioned issues, and as far as possible uses the benefits of the prior art.

### Summary of the invention

This is achieved according to the invention with an automatic feeding device for pets associated with an RFID reader for reading of one or more ID tags that are attached to one or more pets which is distinguished in comprising one or more magazines for portion packages with food, and an automatic opening mechanism for opening of the portion packages and serving of the content, wherein the opening mechanism comprises a knife or a wire, and wherein the automatic feeding device further comprises a device for automatic compression of the portion packages. In another aspect, the present invention concerns a method for using the automatic feeding device comprising; reading one or more ID tags with an RFID reader when the pet or animal approaches the RFID reader (3) wherein the method is distinguished by comprising, opening a magazine (4) with a portion package (6) with food at a programmed time, and opening a portion package with food, with an automatic opening mechanism comprising a knife or a wire, and serving the content, and automatically compressing the portion package after each portion package is emptied of food.

Further preferred embodiments of the invention are disclosed in the dependent claims.

### Brief description of the drawings

The present invention is described in detail in the following, with reference to the appended drawings wherein;
Figure 1 shows the automatic feeding device and a portal with RFID readers.

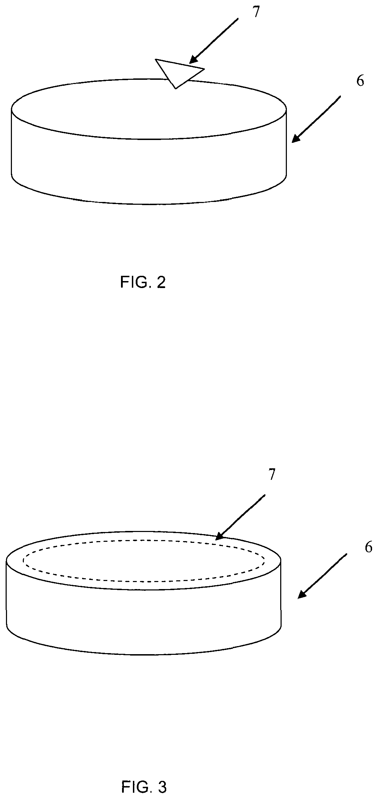

Figure 2 shows a portion package with a knife as opening mechanism.
Figure 3 shows a portion package with steel wire as opening mechanism.

### Detailed description of the invention

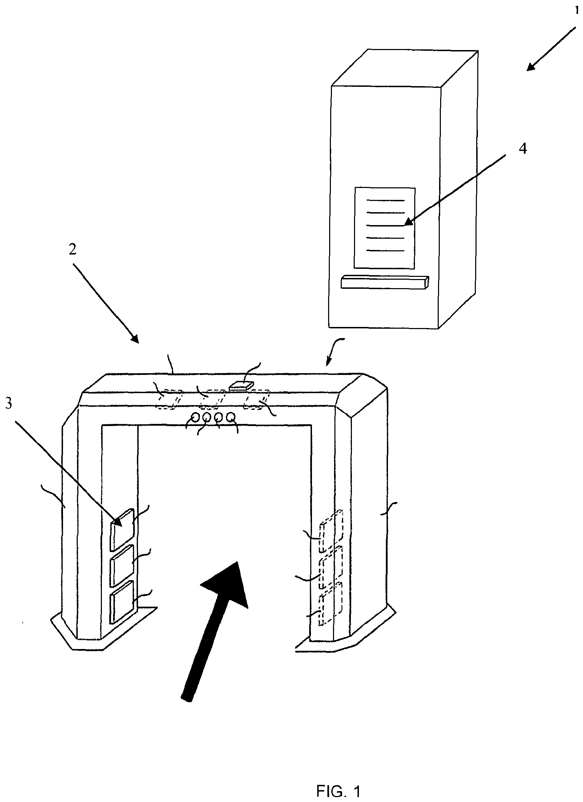

Figure 1 shows an automatic feeding device for pets associated with an RFID reader according to the invention, which is described in detail below.

The automatic feeding device 1 is associated to a RFID reader 3 for reading of one or more ID tags that are attached to one or more pets. The automatic feeding device includes one or more magazines 4 for portion packages 6 with food for the pet or pets. The portion packages are hermetically sealed and the content can thus be all the possible varieties of hermetic food for pets. The portion packages 6 are for example made of aluminum or aluminum alloys. In the preferred embodiment the portion packages 6 are made of aluminum or aluminum alloys, but all known suitable materials may be used. The automatic feeding device 1 comprises logic to distribute and/or vary the food over time. In this way the pets may have variable, healthy and tasty food, even if they are without supervision for a period of time. The device may for example, include a food program for 1 week. On basis of the owner's input, the food is dosed according to the predefined preferences. It will be possible to obtain a variety of diets and food programs. This may be weight loss, dental care, high-fiber etc. The device may also comprise a water bowl with possibility of refill.

The automatic feeding device 1 comprises a reader including antennas for reading ID tag (s). To ensure safe reading of the ID tag (s) the automatic feeding device should have a small portal integrated where the RFID-reader 3 is arranged. The portal may have antenna around its circumference, and is optionally provided with several antennas on the top and on the sides.

The automatic feeding device 1 comprises an automatic opening mechanism 7 for opening the portion packages with hermetic foods and a mechanism for automatically serving of the food. The opening mechanism 7 for opening the hermetic portion packages comprises, for example, a knife or a steel wire. When using steel wire, the steel wire is integrated around the cover. The device has a small hook for pulling of the steel wire and thereby opens the cover. Both the knife and steel wire will after a time lose their sharpness, and this is typically a part that needs to be replaced. In an embodiment a steel wire is used, but all known suitable opening mechanisms can be utilized and a thread of another suitable material may be used. The automatic feeding device comprises equipment for the purpose of reporting to a central register, of the number of times in use, and the user will be informed of maintenance requirement.

As the portion packages 6 are hermetic units, there will be some packaging, and the automatic feeding device therefore comprises equipment for automatic handling of packaging. The portion packages are compressed and therefore occupies a small volume after use, and in the case they are made of aluminum, they are relatively easy to compress compared to e.g. plastic. Portion packages of thin metal is the most appropriate to not occupy a large volume. Alternatively, hermetic bags could be an appropriate alternative.

A method for using the automatic feeding device comprises reading the ID tag(s) with RFID reader 3 when the pet approaches the RFID reader 3. A magazine 4 with a portion package 6 with food will be opened at a programmed time and a portion package 6 with food then opens automatically, for example, with a knife. After a portion package is emptied, the packaging is compressed automatically.

In another embodiment of the automatic feeding device 1, it may comprise two magazines to provide food for two species of animals, such as dog and cat. If the portion packages have a common diameter even if the content is different, the same automatic feeding device can be used, for example, to feed a dog in one home and a cat in another.

The automatic feeding device may be provided with WiFi. The device might be able to monitor the food intake of the animal, and having warning capabilities linked to the internet/email and/or mobile phone. A food program could be provided for a cat, for example for one week, and if the cat does not eat or if the machine does not work, one might be warned by SMS or email. The WiFi link may be direct linked to central databases, and hence deduce the pets age and race. On the basis of this input, the system will be able to suggest suitable food programs for the animal.

The embodiments shown in the drawings and disclosed in the specification are not limiting, but intended only as examples.

## Claims

1. Automatic feeding device (1) for pets associated to a RFID reader (3) for reading of one or more ID tags that are attached to one or more pets
**characterized in that** it comprises one or more magazines (4) for portion packages (6) with food, and an automatic opening mechanism (7) for opening of the portion packages (6) and serving of the content, and where the opening mechanism (7) comprises a knife or a wire, and where the automatic feeding device (1) further comprises a device for automatic compression of the portion packages (6).

2. Automatic feeding device (1) for pets according to claim 1 , wherein the portion packages (6) are hermetically sealed.

3. Automatic feeding device (1) for pets according to any of the preceding claims, wherein the portion packages (6) are made of aluminum or aluminum alloy.

4. Automatic feeding device (1) for pets according to any of the preceding claims, comprising logic to distribute and/or vary the food over time.

5. Automatic feeding device (1) for pets according to any of the preceding claims, comprising a reader including antennas for reading ID tag (s).

6. Method for using the automatic feeding device (1) according to claim 1 , comprising
reading one or more ID tags with a RFID reader (3) when the pet or animal approaches the RFID reader (3) where the method is **characterized in** comprising;
opening a magazine (4) with a portion package (6) with food at a programmed time, and
opening a portion package (6) with food, with an automatic opening mechanism comprising a knife or a wire, and
serving the content, and
automatically compressing the portion package (6) after each portion package (6) is emptied of food.

## Patentansprüche

1. Automatische Fütterungsvorrichtung (1) für Haustiere, die einem RFID-Lesegerät (3) zugeordnet ist, zum Auslesen eines oder mehrerer ID-Tags, die an einem oder mehreren Haustieren befestigt sind
**dadurch gekennzeichnet, dass** sie ein oder mehrere Magazine (4) für Portionspackungen (6) mit Futter und einen automatischen Öffnungsmechanismus (7) zum Öffnen der Portionspackungen (6) und zur Ausgabe des Inhalts umfasst, und wobei der Öffnungsmechanismus (7) ein Messer oder einen Draht umfasst, und wobei die automatische Fütterungsvorrichtung (1) ferner eine Einrichtung zur automatischen Verdichtung der Portionspackungen (6) umfasst.

2. Automatische Fütterungsvorrichtung (1) für Haustiere nach Anspruch 1, wobei die Portionspackungen (6) hermetisch versiegelt sind.

3. Automatische Fütterungsvorrichtung (1) für Haustiere nach einem der vorhergehenden Ansprüche, wobei die Portionspackungen (6) aus Aluminium oder einer Aluminiumlegierung hergestellt sind.

4. Automatische Fütterungsvorrichtung (1) für Haustiere nach einem der vorhergehenden Ansprüche, umfassend eine Logik zum Verteilen und/oder Variieren des Futters über die Zeit.

5. Automatische Fütterungsvorrichtung (1) für Haustiere nach einem der vorhergehenden Ansprüche, umfassend ein Lesegerät mit Antennen zum Auslesen von ID-Tag (s).

6. Verfahren zur Verwendung der automatischen Fütterungsvorrichtung (1) nach Anspruch 1, umfassend
das Auslesen eines oder mehrerer ID-Tags mit einem RFID-Lesegerät (3), wenn das Haustier oder Tier sich dem RFID-Lesegerät (3) annähert, wobei das Verfahren **dadurch gekennzeichnet ist, dass** es umfasst;
Öffnen eines Magazins (4) mit einer Portionspackung (6) mit Futter zu einem programmierten Zeitpunkt und
Öffnen einer Portionspackung (6) mit Futter mit einem ein Messer oder einen Draht umfassenden Öffnungsmechanismus und
Ausgabe des Inhalts und
automatische Verdichtung der Portionspackung (6), nachdem das Futter aus jeder Portionspackung (6) entnommen worden ist.

## Revendications

1. Dispositif d'alimentation automatique (1) pour animaux de compagnie associé à un lecteur RFID (3) pour la lecture d'une ou plusieurs étiquettes ID qui sont attachées à un ou plusieurs animaux de compagnie,
**caractérisé en ce qu'**il comprend un ou plusieurs magasins (4) pour des paquets de portions (6) avec de la nourriture, et un mécanisme d'ouverture automatique (7) pour l'ouverture des paquets de portions (6) et le service du contenu, et dans lequel le mécanisme d'ouverture (7) comprend un couteau ou un fil, et dans lequel le dispositif d'alimentation automatique (1) comprend en outre un dispositif de compression automatique des paquet de portions (6).

2. Dispositif d'alimentation automatique (1) pour animaux de compagnie selon la revendication 1, dans lequel les paquets de portions (6) sont scellés hermétiquement.

3. Dispositif d'alimentation automatique (1) pour animaux de compagnie selon l'une quelconque des revendications précédentes, dans lequel les paquets de portions (6) sont en aluminium ou en alliage d'aluminium.

4. Dispositif d'alimentation automatique (1) pour animaux de compagnie selon l'une quelconque des revendications précédentes, comprenant une logique pour distribuer et/ou modifier les aliments dans le temps.

5. Dispositif d'alimentation automatique (1) pour animaux de compagnie selon l'une quelconque des revendications précédentes, comprenant un lecteur comprenant des antennes pour la lecture de la (les) étiquette(s) ID.

6. Procédé pour utiliser le dispositif d'alimentation automatique (1) selon la revendication 1, comprenant
la lecture d'une ou plusieurs étiquettes ID avec un lecteur RFID (3) lorsque l'animal de compagnie ou l'animal en général s'approche du lecteur RFID (3) dans lequel le procédé est **caractérisé en ce qu'**il comprend;
l'ouverture d'un magasin (4) avec un paquet de portions (6) comprenant de la nourriture à un moment programmé, et
l'ouverture d'un paquet de portions (6) comprenant de la nourriture, avec un mécanisme d'ouverture automatique comprenant un couteau ou un fil, et
le service du contenu, et
la compression automatique du paquet de portions (6) après que chaque paquet de portions (6) est vidé de nourriture.
